# EUROPEAN PATENT APPLICATION

(11) **EP 4 653 759 A1**
(43) Date of publication of application: **26.11.2025**
(21) Application number: 25173495.0
(22) Date of filing: 30.04.2025
(51) Int. Cl.: F21S 43/14, F21S 43/19, F21S 43/20, F21S 43/27, F21S 43/50, F21S 45/48, F21W 103/60

(54) **VEHICLE LAMP**

(30) Priority: 21.05.2024 KR 20240065515
(71) Applicant: SL Corporation, Daegu 41514 (KR)
(72) Inventor: KIM, Jongun, 38470 Gyeongsan-si, Gyeongsangbuk-do (KR); LEE, Minseop, 38470 Gyeongsan-si, Gyeongsangbuk-do (KR); LEE, Jungsoo, 38470 Gyeongsan-si, Gyeongsangbuk-do (KR)
(74) Representative: Hoefer & Partner Patentanwälte mbB

(57) **Abstract**

A vehicle lamp includes: a light source unit (1000) including a plurality of light sources, each of which generates light; an optical path adjustment unit (2000) that adjusts a path of the light emitted from at least one of the plurality of light sources; and an optical lens unit (3000) including a plurality of incident lenses upon which the light emitted from the optical path adjustment unit (2000) is incident and a plurality of exit lenses through which the light incident into the plurality of incident lenses is emitted. The optical path adjustment unit (2000) includes a plurality of adjustment lenses configured to adjust the path of light emitted from the respective light sources.

## Description

### CROSS-REFERENCE TO RELATED APPLICATION

This application claims priority from Korean Patent Application No. 10-2024-0065515 filed on May 21, 2024, which is incorporated herein by reference in its entirety.

### BACKGROUND

### 1. Technical Field

The present disclosure relates to a vehicle lamp and, more particularly, to a vehicle lamp capable of forming a variety of dynamic images.

### 2. Description of the Related Art

In general, various lamps are provided in vehicles to enable drivers to more easily identify objects around the vehicles during low-light conditions (e.g., nighttime driving) and to signal the vehicles' driving status to surrounding vehicles or pedestrians.

For example, headlamps and fog lamps are primarily intended for illumination purposes, while turn signal lamps, tail lamps, and brake lamps are primarily intended for signaling purposes. Each lamp is regulated by laws regarding its installation standards and specifications to ensure that it fully performs its intended function.

Recently, since the information that can be provided solely through lighting and signaling functions is limited, active research has been conducted on equipping vehicles not only with lamps for the illumination and signaling functions, but also with lamps that can form images such as letters or patterns on the road surfaces around the vehicles to provide a wider range of information.

### SUMMARY

An object of the present disclosure is to provide a vehicle lamp in which a component for forming two or more images can be shared.

Another object of the present disclosure is to provide a vehicle lamp capable of forming not only static images but also dynamic images.

The objects of the present disclosure are not limited to those mentioned above, and other objects not explicitly stated will be clearly understood by those skilled in the art based on the following description.

According to an aspect of the present disclosure, a vehicle lamp may include a light source unit including a plurality of light sources, each of which generates light; an optical path adjustment unit that adjusts a path of the light emitted from at least one of the plurality of light sources; and an optical lens unit including a plurality of incident lenses upon which the light emitted from the optical path adjustment unit is incident and a plurality of exit lenses through which the light incident into the plurality of incident lenses is emitted. In particular, the optical path adjustment unit may include a plurality of adjustment lenses configured to adjust the path of the light emitted from the plurality of light sources.

The optical lens unit may further include a plurality of shields disposed between the plurality of incident lenses and the plurality of exit lenses and configured to obstruct a portion of light from proceeding toward the plurality of exit lenses.

The optical lens unit may be divided into a plurality of lens areas to correspond to the plurality of light sources, and light that passes through at least one of the plurality of lens areas may form at least one image on a surface onto which the light is irradiated.

Among a plurality of images formed by the light that passes through the plurality of lens areas, at least one image may have a different attribute from at least one other image. The attribute includes at least one of image shape, formation position, brightness, size, or color.

At least one of the plurality of lens areas may include a plurality of transmission regions, and sub-images formed by light that passes through the plurality of transmission regions may have different attributes. Areas occupied by the plurality of transmission regions within the at least one of the plurality of lens areas may be different. Among the sub-images, at least one sub-image may be formed at a different distance from the optical lens unit than at least one other sub-image. Among the plurality of transmission regions, a transmission region configured to form a sub-image at a position more proximate to the optical lens unit may have a smaller size than a transmission region configured to form a sub-image at a position more distant from the optical lens unit.

The plurality of images may be sequentially formed along at least one direction. Each of the plurality of images may include a plurality of sub-images, and the plurality of sub-images may be sequentially formed along a same direction. In some embodiments, each of the plurality of images may include a plurality of sub-images, and a sub-image of at least one image among the plurality of images and another sub-image of at least one other image among the plurality of images may be sequentially formed along different directions.

According to the vehicle lamp of the present disclosure, the following effects can be achieved. Since a component for forming multiple images can be shared, the number of parts can be reduced, and costs can be lowered. Additionally, since the lighting sequence, interval, and duration of multiple light sources can be controlled, not only static images but also dynamic images such as animation effects can be generated, thereby enabling a greater variety of image shapes.

It should be noted that the effects of the present disclosure are not limited to those described above, and other effects of the present disclosure will be apparent from the following description.

### BRIEF DESCRIPTION OF THE DRAWINGS

The above and other aspects and features of the present disclosure will become more apparent by describing exemplary embodiments thereof in detail with reference to the attached drawings, in which:
FIGS. 1 and 2 are perspective views illustrating a vehicle lamp according to an embodiment of the present disclosure;
FIG. 3 is a front view illustrating the vehicle lamp according to an embodiment of the present disclosure;
FIG. 4 is a side view illustrating the vehicle lamp according to an embodiment of the present disclosure;
FIGS. 5 and 6 are exploded perspective views illustrating the vehicle lamp according to an embodiment of the present disclosure;
FIG. 7 is a cross-sectional view taken along line A-A' of FIG. 3;
FIG. 8 is a front view illustrating a lens unit according to an embodiment of the present disclosure;
FIG. 9 is a rear view illustrating the lens unit according to an embodiment of the present disclosure;
FIG. 10 is a front view illustrating a guide unit according to an embodiment of the present disclosure;
FIG. 11 is a rear view illustrating the guide unit according to an embodiment of the present disclosure;
FIG. 12 is a front view illustrating an optical path adjustment unit according to an embodiment of the present disclosure;
FIG. 13 is a rear view illustrating the optical path adjustment unit according to an embodiment of the present disclosure;
FIG. 14 is a cross-sectional view taken along line B-B' of FIG. 12;
FIG. 15 is a front view illustrating an optical lens unit according to an embodiment of the present disclosure;
FIG. 16 is a rear view illustrating the optical lens unit according to an embodiment of the present disclosure;
FIG. 16A is a side view illustrating the optical lens unit according to an embodiment of the present disclosure;
FIG. 17 is a schematic view illustrating a region where light that passes through lens areas according to an embodiment of the present disclosure is irradiated;
FIG. 18 is a schematic view illustrating images formed by the vehicle lamp according to an embodiment of the present disclosure;
FIG. 19 is a schematic view illustrating multiple images sequentially formed along one direction according to an embodiment of the present disclosure; and
FIG. 20 is a schematic view illustrating multiple images sequentially formed along different directions according to an embodiment of the present disclosure.

### DETAILED DESCRIPTION

Advantages and features of the present disclosure and methods of accomplishing the same may be understood more readily by referring to the following detailed description of exemplary embodiments and the accompanying drawings. The present disclosure may, however, be embodied in many different forms and should not be construed as being limited to the embodiments set forth herein. Rather, these embodiments are provided so that this disclosure will be thorough and complete and will fully convey the concept of the disclosure to those skilled in the art, and the present disclosure will only be defined by the appended claims. Throughout the specification, like reference numerals in the drawings denote like elements.

In some embodiments, well-known steps, structures and techniques will not be described in detail to avoid obscuring the disclosure.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

Embodiments of the disclosure are described herein with reference to plan and cross-section illustrations that are schematic illustrations of exemplary embodiments of the disclosure. As such, variations from the shapes of the illustrations as a result, for example, of manufacturing techniques and/or tolerances, are to be expected. Thus, embodiments of the disclosure should not be construed as limited to the particular shapes of regions illustrated herein but are to include deviations in shapes that result, for example, from manufacturing. In the drawings, respective components may be enlarged or reduced in size for convenience of explanation.

A vehicle lamp according to an embodiment of the present disclosure will hereinafter be described with reference to the accompanying drawings.

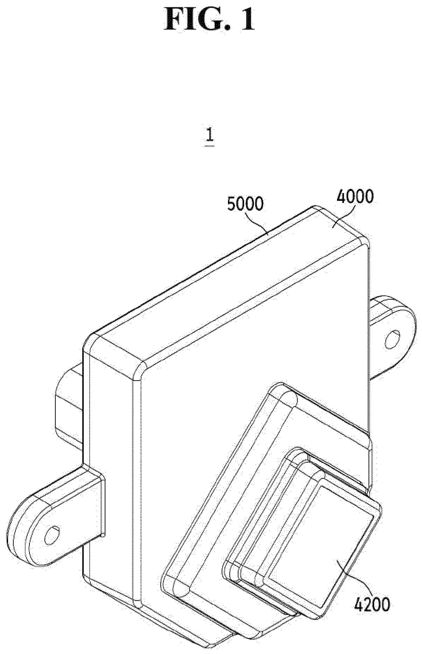

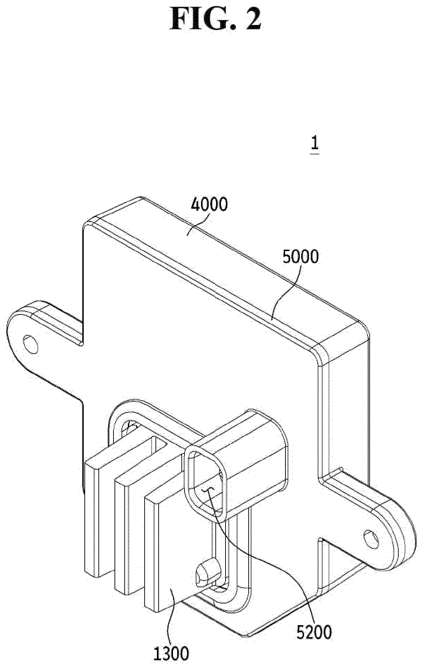

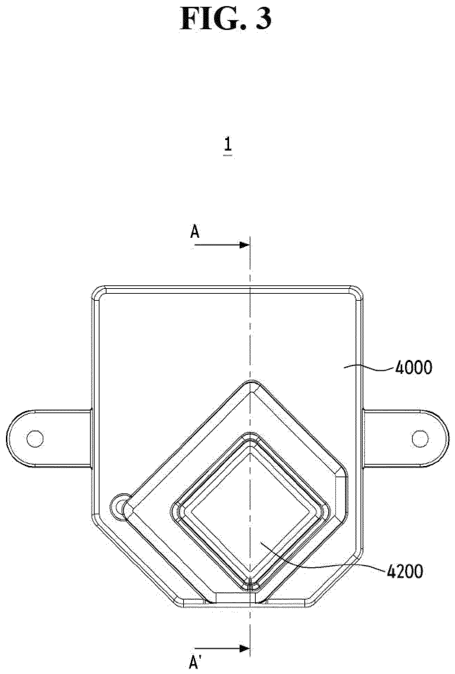

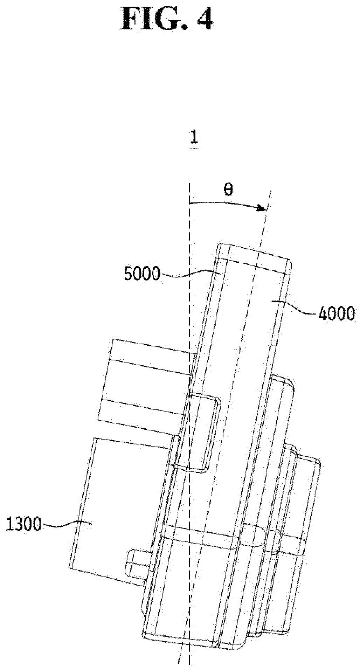

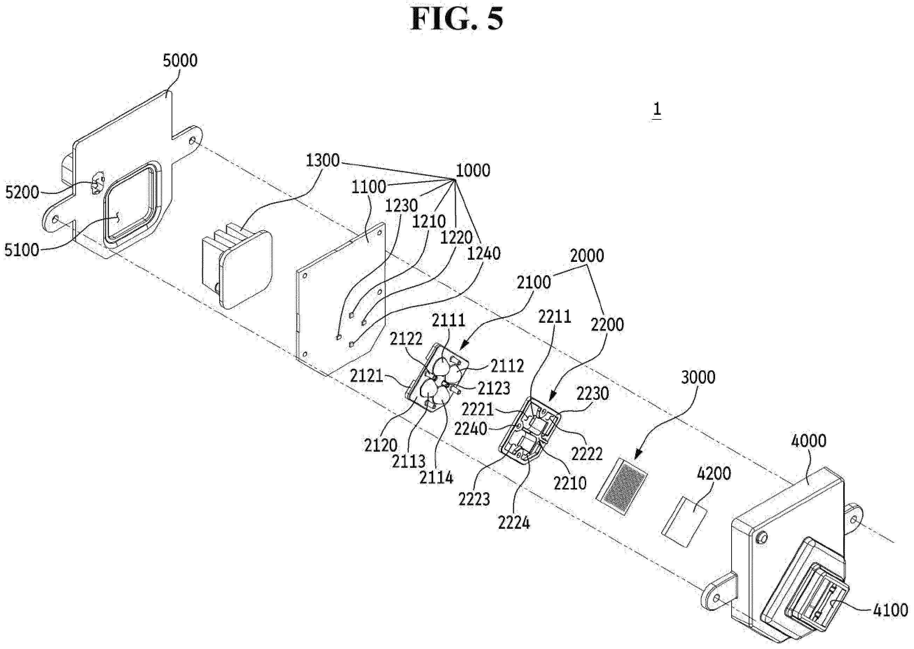

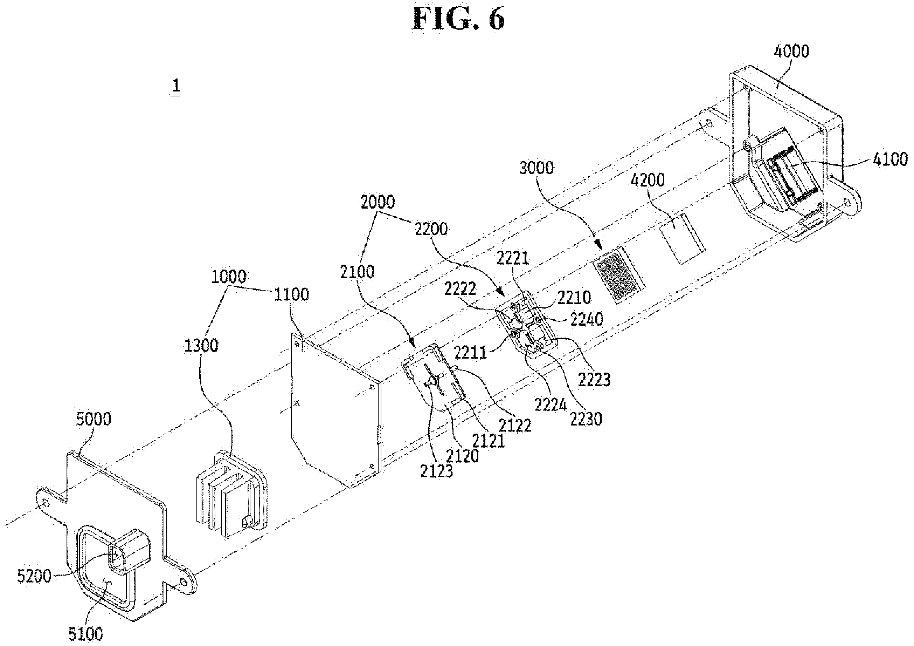

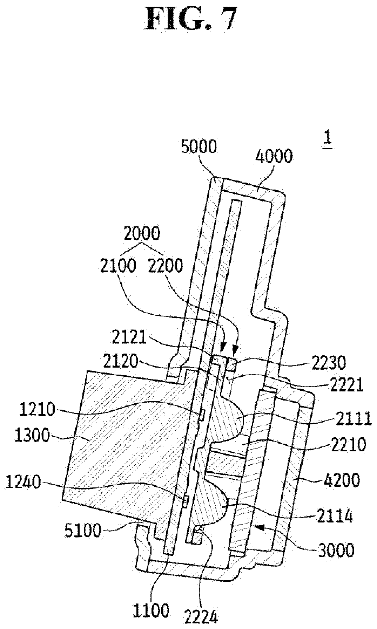

FIGS. 1 and 2 are perspective views illustrating a vehicle lamp according to an embodiment of the present disclosure, FIG. 3 is a front view illustrating the vehicle lamp according to an embodiment of the present disclosure, FIG. 4 is a side view illustrating the vehicle lamp according to an embodiment of the present disclosure, FIGS. 5 and 6 are exploded perspective views illustrating the vehicle lamp according to an embodiment of the present disclosure, and FIG. 7 is a cross-sectional view taken along line A-A' of FIG. 3.

Referring to FIGS. 1 through 7, a vehicle lamp 1 may include a light source unit 1000, an optical path adjustment unit 2000, and an optical lens unit 3000.

The vehicle lamp 1 will hereinafter be described as forming images representing various types of information, which is desired to be communicated to surrounding vehicles (including their drivers) or pedestrians, on the road surface around the vehicle, but the present disclosure is not limited thereto. The vehicle lamp 1 may also be used as a lamp for illumination or signaling functions, as well as an interior lamp installed inside the vehicle.

For example, the vehicle lamp 1 may form an image on the road surface around the vehicle to provide a welcoming function that simulates the vehicle greeting the driver when the driver approaches. Additionally, the vehicle lamp 1 may form an image on the road surface around the vehicle to inform surrounding vehicles or pedestrians of the vehicle's status, such as driving direction, deceleration, or door opening.

The vehicle lamp 1 may be installed in various positions where images can be easily formed on the road surface around the vehicle, such as an outside mirror, a rocker panel, or the front or rear of the vehicle body. As illustrated in FIG. 4, the vehicle lamp 1 may be installed at a predetermined downward inclination angle θ toward the road surface around the vehicle with respect to an up-down direction (e.g., vertical direction), but the present disclosure is not limited thereto. The position and angle at which the vehicle lamp 1 is installed to form images on the road surface around the vehicle may vary.

In the following description, light may be projected onto the road surface around the vehicle to form images, but the present disclosure is not limited thereto. The surface onto which the light is to be projected for forming images may be disposed inside or outside the vehicle, depending on the intended application of the vehicle lamp 1.

The light source unit 1000 may include a plurality of light sources 1210, 1220, 1230, and 1240 installed on the front surface of a substrate 1100. Images formed by the light emitted from the light sources 1210, 1220, 1230, and 1240 may have the same or different attributes.

Semiconductor light-emitting devices such as light-emitting diodes (LEDs) may be used as the light sources 1210, 1220, 1230, and 1240, but the present disclosure is not limited thereto. Various types of light sources other than semiconductor light-emitting devices, such as laser diodes (LDs) or bulbs, may also be used. Additionally, depending on the type of the light sources 1210, 1220, 1230, and 1240, optical components such as reflectors, phosphors, mirrors, prisms, and lenses may be used to adjust the path and/or brightness of light.

Here, the attributes may include at least one of image shape, formation position, brightness, size, or color. When an image formed by one of the light sources 1210, 1220, 1230, and 1240 has different attributes from an image formed by another light source, it may be understood that the two images differ in at least one of image shape, formation position, brightness, size, or color.

Additionally, when the light source unit 1000 includes the light sources 1210, 1220, 1230, and 1240, the lighting sequence, interval, and duration of each of the light sources 1210, 1220, 1230, and 1240 may be individually controlled. This allows for the implementation of not only static images but also dynamic images, providing animation effects. This will be described later in detail.

In the drawings, the light source unit 1000 is illustrated as including four light sources 1210, 1220, 1230, and 1240, but the present disclosure is not limited thereto. The number of light sources included in the light source unit 1000 may vary depending on the number of images to be formed by the vehicle lamp 1.

The light source unit 1000 may include not only the light sources 1210, 1220, 1230, and 1240 on the substrate 1100, but also various components, such as connectors, for supplying power to the light sources 1210, 1220, 1230, and 1240 or controlling the operation of the light sources 1210, 1220, 1230, and 1240.

The optical path adjustment unit 2000 may be disposed in front of the light source unit 1000 and may adjust the path of light emitted from the light source unit 1000 to ensure that the light is directed to the optical lens unit 3000 disposed in front of the optical path adjustment unit 2000 with minimal loss.

In this case, the light sources 1210, 1220, 1230, and 1240 may be arranged such that their light emission surfaces face forward toward the optical path adjustment unit 2000 disposed in front of the light source unit 1000.

The optical path adjustment unit 2000 may be disposed in front of the light source unit 1000, and the optical lens unit 3000 may be disposed in front of the optical path adjustment unit 2000, assuming that the direction in which light is projected from the vehicle lamp 1 is a forward direction. However, the actual meaning of "forward" may vary depending on the position and orientation in which the vehicle lamp 1 is installed.

The optical path adjustment unit 2000 may include a lens unit 2100, which includes a plurality of adjustment lenses 2111, 2112, 2113, and 2114 corresponding to the plurality of light sources 1210, 1220, 1230, and 1240, respectively. Additionally, the optical path adjustment unit 2000 may include a guide unit 2200, which ensures that the light beams emitted from the light sources 1210, 1220, 1230, and 1240 proceed separately toward the optical lens unit 3000 without causing interference between their paths. The optical path adjustment unit 2000 may be understood as an assembly of the lens unit 2100 and the guide unit 2200.

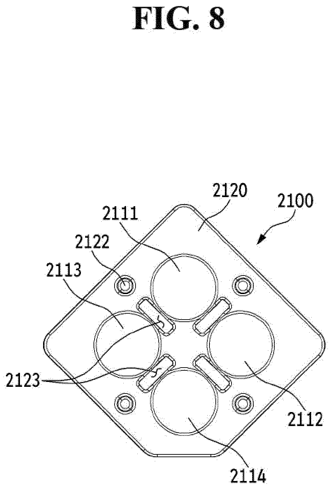

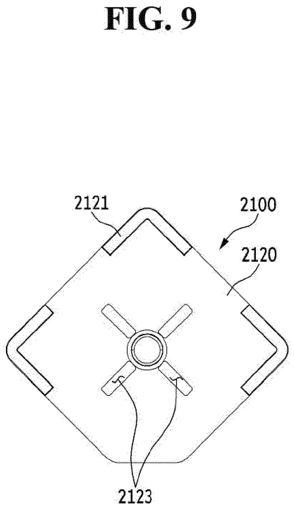

FIG. 8 is a front view illustrating a lens unit according to an embodiment of the present disclosure, and FIG. 9 is a rear view illustrating the lens unit according to an embodiment of the present disclosure.

Referring to FIGS. 8 and 9, the lens unit 2100 may include the adjustment lenses 2111, 2112, 2113, and 2114 and a lens plate 2120.

The adjustment lenses 2111, 2112, 2113, and 2114 may be separated from one another by a predetermined distance and disposed on the lens plate 2120 to correspond to the positions of the respective light sources 1210, 1220, 1230, and 1240. The adjustment lenses 2111, 2112, 2113, and 2114 may serve to condense the light emitted from the light sources 1210, 1220, 1230, and 1240. In this embodiment, since the light source unit 1000 includes four light sources 1210, 1220, 1230, and 1240, the lens unit 2100 may include four adjustment lenses 2111, 2112, 2113, and 2114, but the present disclosure is not limited thereto. The number of adjustment lenses may vary in accordance with the number of light sources.

The adjustment lenses 2111, 2112, 2113, and 2114 may be implemented as aspheric lenses designed to convert the incident light emitted from the light sources 1210, 1220, 1230, and 1240 into substantially collimated light, but the present disclosure is not limited thereto. Various other lenses capable of converting light into substantially collimated light, such as total internal reflection (TIR) lenses or Fresnel lenses, may also be used as the adjustment lenses 2111, 2112, 2113, and 2114.

The adjustment lenses 2111, 2112, 2113, and 2114 may be integrally formed with the lens plate 2120. As a result, compared to assembling the adjustment lenses 2111, 2112, 2113, and 2114 with the lens plate 2120, the number of parts of the lens unit 2100 can be reduced, and the assembly process can be simplified.

Here, "integrally formed" means not only a case where the lens plate 2120 and the adjustment lenses 2111, 2112, 2113, and 2114 are fabricated as a single piece but also a case where the adjustment lenses 2111, 2112, 2113, and 2114 and the lens plate 2120 are fabricated separately and then assembled in a manner that prevents relative motion therebetween.

The lens plate 2120 may include one or more protrusions 2121 that extend toward the light source unit 1000 on the surface of the lens plate 2120 facing the light source unit 1000. The protrusions 2121 may serve to space the adjustment lens 2111, 2112, 2113, and 2114 apart from the respective light sources 1210, 1220, 1230, and 1240 to prevent structural interference therebetween.

Here, the lens plate 2120 may be formed asymmetrically in at least one direction. This asymmetry may help prevent misalignment during assembly and allow the assembly position of the lens unit 2100 to be more easily verified.

FIGS. 8 and 9 illustrate an example where the lens plate 2120 is formed in a substantially rhombus shape, which is symmetrical in a left-right direction and asymmetrical in the up-down direction.

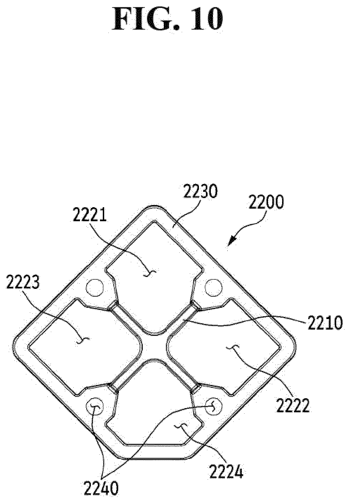

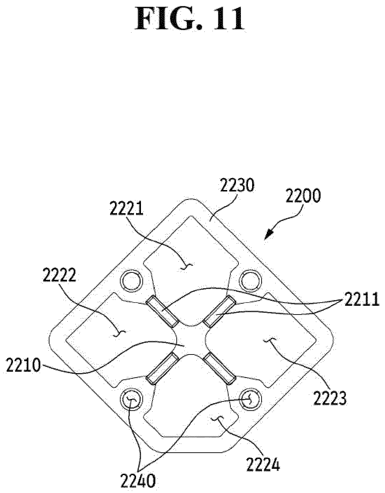

FIG. 10 is a front view illustrating a guide unit according to an embodiment of the present disclosure, and FIG. 11 is a rear view illustrating the guide unit according to an embodiment of the present disclosure.

Referring to FIGS. 10 and 11, the guide unit 2200 may be assembled with the lens unit 2100 and may include a plurality of through-holes (e.g., openings or apertures) 2221, 2222, 2223, and 2224 that are sectioned by a partition 2210. The guide unit 2200 may ensure that the light beams emitted from the light sources 1210, 1220, 1230, and 1240 of the light source unit 1100 pass through the respective adjustment lens 2111, 2112, 2113, and 2114 toward the optical lens unit 3000, thereby preventing interference between their paths.

The partition 2210 may be connected between opposite inner edges of a frame 2230 in which a hollow space is formed. The partition 2210 and the frame 2230 may together define the through-holes 2221, 2222, 2223, and 2224.

In this embodiment, since the lens unit 2100 includes four adjustment lenses 2111, 2112, 2113, and 2114, the partition 2210 may be formed in a cross shape within a closed-loop frame 2230 to define the four through-holes 2221, 2222, 2223, and 2224, but the present disclosure is not limited thereto. The shape and arrangement of the partition 2210 may vary depending on the number and positions of the through-holes formed in the guide unit 2200.

The guide unit 2200 may include one or more assembly grooves 2240 into which assembly protrusions 2122, formed on the lens plate 2120, are configured to be inserted. When the assembly protrusions 2122 are inserted into the assembly grooves 2240, the assembly protrusions 2122 and the assembly grooves 2240 may be fixed together by thermal welding or the like, allowing the lens unit 2100 and the guide unit 2200 to be modularized. By modularizing the lens unit 2100 and the guide unit 2200, which constitute the optical path adjustment unit 2000, before assembling the vehicle lamp 1, the overall assembly process can be simplified due to the single step assembly of the lens unit 2100 and the guide unit 2200.

In this embodiment, the lens plate 2120 may include one or more assembly protrusions 2122, and the guide unit 2200 may include one or more assembly grooves 2240. However, the present disclosure is not limited to this. Alternatively or additionally, the guide unit 2200 may include one or more assembly protrusions, and the lens plate 2120 may include one or more assembly grooves.

Meanwhile, the lens unit 2100 may include the through-holes (e.g., openings or slots) 2123 formed among the adjustment lenses 2111, 2112, 2113, and 2114 on the lens plate 2120. The guide unit 2200 may include one or more extension portions 2211 that extend from the partition 2210 toward the light source unit 1000. The ends of the extension portions 2211 may pass through the through-holes 2123 and be disposed between the light sources 1210, 1220, 1230, and 1240. Accordingly, the light emitted from the light sources 1210, 1220, 1230, and 1240 can be prevented from entering adjacent adjustment lenses instead of their own adjustment lenses 2111, 2112, 2113, and 2114, thereby preventing optical interference.

In this embodiment, to prevent interference when positioning the extension portions 2211 through the through-holes 2123 and to form two or more extension portions 2211 in the partition 2210, the extension portions 2211 may be formed in a smaller size than the partition 2210.

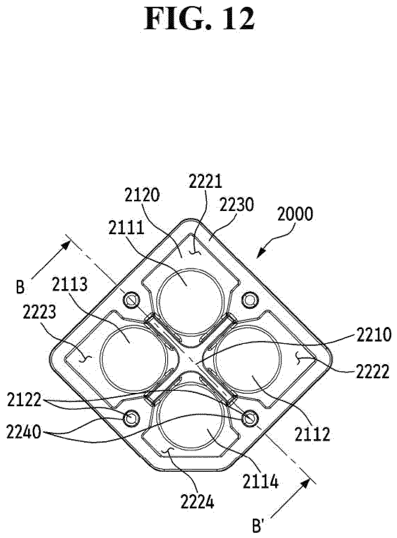

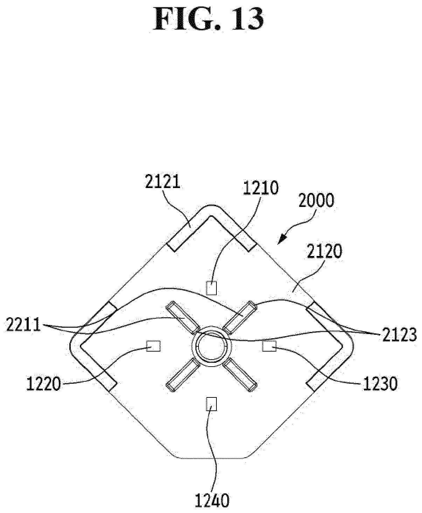

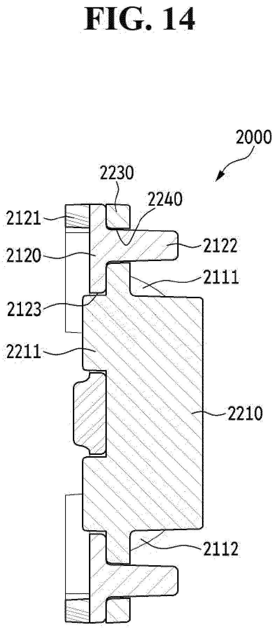

FIG. 12 is a front view illustrating an optical path adjustment unit according to an embodiment of the present disclosure, FIG. 13 is a rear view illustrating the optical path adjustment unit according to an embodiment of the present disclosure, and FIG. 14 is a cross-sectional view taken along line B-B' of FIG. 12.

Referring to FIGS. 12 through 14, the optical path adjustment unit 2000 may be assembled by inserting the assembly protrusions 2122, formed on the lens plate 2120 of the lens unit 2100, into the assembly grooves 2240 of the guide unit 2200, which is disposed in front of the lens unit 2100. As a result, the adjustment lenses 2111, 2112, 2113, and 2114 may be accommodated within the respective through-holes 2221, 2222, 2223, and 2224. The assembly protrusions 2122 and the assembly grooves 2240 may then be fixed to each other using thermal welding or the like, thereby completing the assembly of the lens unit 2100 and the guide unit 2200.

At this time, the extension portions 2211 that extends from the partition 2210 toward the light source unit 1000 may pass through the through-holes 2123 of the lens plate 2120 and be disposed between adjacent light sources among the light sources 1210, 1220, 1230, and 1240. Accordingly, the light emitted from the light sources 1210, 1220, 1230, and 1240 can be prevented from entering adjacent adjustment lenses instead of their respective adjustment lenses 2111, 2112, 2113, and 2114, thereby preventing optical interference.

The optical path adjustment unit 2000 may be assembled with the substrate 1100 by applying an ultraviolet (UV)-curable adhesive to the substrate 1100, placing the optical path adjustment unit 2000 on the substrate 1100, and irradiating UV light onto the applied adhesive to cure it. However, the present disclosure is not limited thereto. The light source unit 1000 and the optical path adjustment unit 2000 may be assembled using various other methods such as hook coupling, screw fastening, or any other types of glueing.

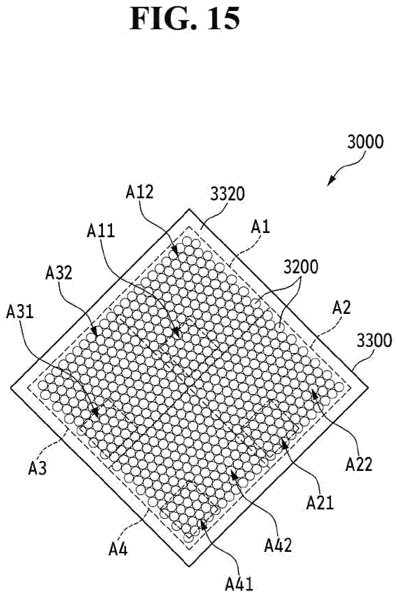

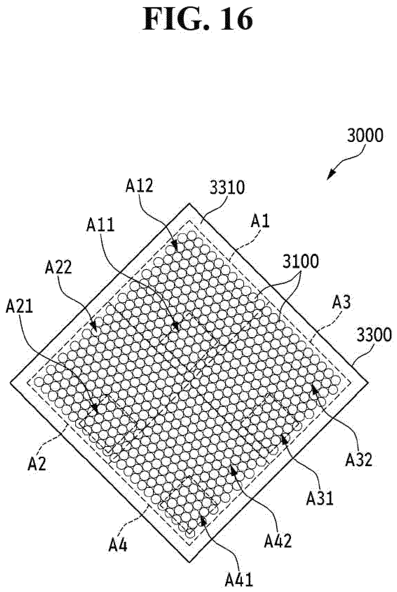

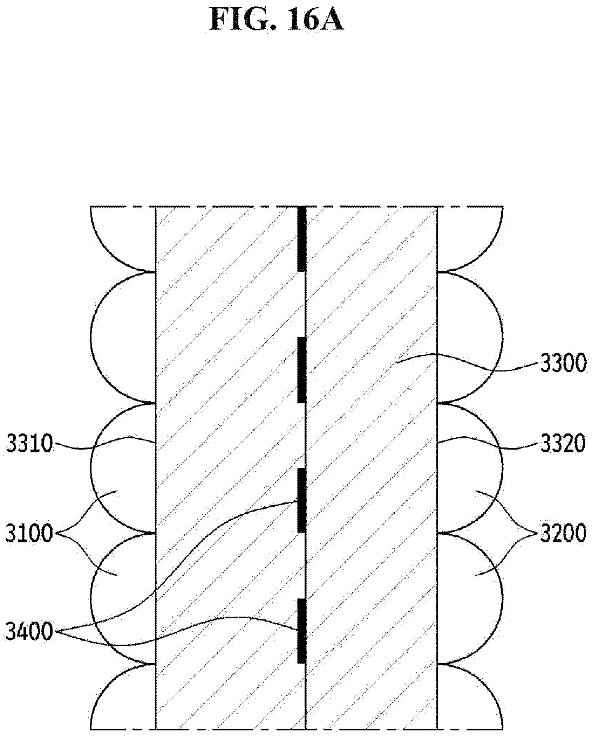

FIG. 15 is a front view illustrating an optical lens unit according to an embodiment of the present disclosure, and FIG. 16 is a rear view illustrating the optical lens unit according to an embodiment of the present disclosure.

Referring to FIGS. 15 and 16, the optical lens unit 3000 may allow at least a portion of the light incident from the optical path adjustment unit 2000 to be emitted, thereby forming one or more images on the road surface around the vehicle. The images formed by the light emitted from the optical lens unit 3000 may include letters, patterns, or a combination thereof.

The optical lens unit 3000 may include a plurality of incident lenses 3100, a plurality of exit lenses 3200, and a light transmission portion 3300.

The incident lenses 3100 may receive the light emitted from the optical path adjustment unit 2000. The light incident on the incident lenses 3100 may be emitted through the respective exit lenses 3200. In this embodiment, micro-lenses, which are advantageous for miniaturization due to their relatively short focal length, may be used as the incident lenses 3100 and the exit lenses 3200, but the present disclosure is not limited thereto.

The incident lenses 3100 may be disposed on an incident surface 3310 of the light transmission portion 3300, and the exit lenses 3200 may be disposed on an exit surface 3320 of the light transmission portion 3300. The light transmission portion 3300 may be formed of a material that allows for the transmission of light, such as glass, so that the light incident on the incident lenses 3100 may pass through the light transmission portion 3300 and exit through the exit lenses 3200.

The optical lens unit 3000 may further include a plurality of shields 3400 that are disposed between the incident surface 3310 and the exit surface 3320 of the light transmission portion 3300. The shields 3400 may include light-transmitting regions and light-blocking regions to obstruct a portion of the light from proceeding toward the respective exit lenses 3200. The light transmission portion 3300 may include a plurality of light-transmitting members so that the shields 3400 may be disposed between the incident surface 3310 and the exit surface 3320.

Each of the plurality of shields 3400 may have a shape and size that vary depending on the shape and size of each image to be formed on the road surface around the vehicle by the vehicle lamp 1.

When the light source unit 1000 is assembled with a housing 4000, an end of the partition 2210 of the optical path adjustment unit 2000 facing the optical lens unit 3000 may be disposed to abut the incident surface 3310 of the optical lens unit 3000, i.e., the incident surface 3310 of the light transmission portion 3300. Accordingly, as pressure is applied to the optical lens unit 3000, the position of the optical lens unit 3000 may be fixed, thereby preventing movement of the optical lens unit 3000.

In this embodiment, the incident lenses 3100 may be evenly formed over the entire incident surface 3310 of the light transmission portion 3300, but the present disclosure is not limited thereto. To prevent structural interference or damage, the incident surface 3310 of the light transmission portion 3300 may include no incident lenses in such regions where the incident surface 3310 is configured to contact the ends of the partition 2210.

The light source unit 1000, the optical path adjustment unit 2000, and the optical lens unit 3000 may be disposed within the housing 4000, which has an open surface. A housing cover 5000 may be disposed at the open surface of the housing 4000 to secure the positions of the light source unit 1000, the optical path adjustment unit 2000, and the optical lens unit 3000 within the housing 4000, thereby preventing the light source unit 1000, the optical path adjustment unit 2000, and the optical lens unit 3000 from shifting from their intended positions.

The housing 4000 may include another opening 4100 through which the light emitted from the optical lens unit 3000 passes, allowing an image to be formed on the road surface around the vehicle. A cover lens 4200, formed of a material that allows for the transmission of the emitted light, may be disposed at the opening 4100. The cover lens 4200 may serve to protect the interior of the housing 4000 from foreign substances that may cause contamination or damage.

Meanwhile, a heat dissipation unit 1300 may be disposed at the rear of the substrate 1100 to more readily dissipate heat that may be generated when the light is emitted from the light sources 1210, 1220, 1230, and 1240. To improve heat dissipation performance, the housing cover 5000 may include a discharge aperture 5100 that exposes the heat dissipation unit 1300 to the outside. In addition to the discharge aperture 5100, the housing cover 5000 may further include a connection port 5200, allowing a wire for power supply or operation control of the vehicle lamp 1 to be connected to the substrate 1100 therethrough.

Meanwhile, the optical lens unit 3000 may be divided into a plurality of lens areas A1, A2, A3, and A4. Each of the lens areas A1, A2, A3, and A4 may allow for the transmission of at least a portion of the light emitted from the respective light sources 1210, 1220, 1230, and 1240, thereby forming one or more images on the road surface around the vehicle.

In this case, a plurality of images formed by the light that passes through the lens areas A1, A2, A3, and A4 may have different attributes. Here, the plurality of images having different attributes may be understood as differing in at least one of shape, formation position, brightness, size, or color. Accordingly, since a single optical lens unit 3000 can form multiple images with different attributes, a component for forming such images can be shared, thereby simplifying the configuration of the vehicle lamp 1 and reducing costs.

In addition, at least one of the lens areas A1, A2, A3, and A4 may be further divided into a plurality of transmission regions. The plurality of transmission regions may serve to form a plurality of sub-images for forming a corresponding image, and the plurality of sub-images may have the same or different attributes.

In this embodiment, the plurality of sub-images of each image formed by the vehicle lamp 1 may have different attributes. For example, among the plurality of sub-images, one sub-image may include letters, and another may include patterns. However, the present disclosure is not limited to this, and the plurality of sub-images may differ in at least one of shape, formation position, brightness, size, or color.

In this embodiment, the lens areas A1, A2, A3, and A4 may include an equal number of transmission regions. In this case, a plurality of images formed by the vehicle lamp 1 may include the equal number of sub-images, but have different attributes, meaning that at least one of the sub-images forming each image differs in at least one attribute from the other sub-images.

The lens areas A1, A2, A3, and A4 having the equal number of transmission regions are merely exemplary, and the present disclosure is not limited thereto. The number of transmission regions defined in each of the lens areas A1, A2, A3, and A4 may vary depending on the attributes of the images to be formed by the respective lens areas A1, A2, A3, and A4.

In this embodiment, since four light sources 1210, 1220, 1230, and 1240 are provided, four lens areas A1, A2, A3, and A4 may be provided. As an example, each of the lens areas A1, A2, A3, and A4 may include two transmission regions. The lens areas A1, A2, A3, and A4 will hereinafter be referred to as first, second, third, and fourth lens areas A1, A2, A3, and A4, respectively, and four images formed by the light beams that pass through the first, second, third, and fourth lens areas A1, A2, A3, and A4, respectively, will hereinafter be referred to as first, second, third, and fourth images, respectively.

Also, the two transmission regions included in each of the first, second, third, and fourth lens areas A1, A2, A3, and A4 will hereinafter be referred to as a first transmission region and a second transmission region, and two sub-images formed by the light beams that pass through the first and second transmission regions will hereinafter be referred to as a first sub-image and a second sub-image, respectively.

The first lens area A1 may include a first transmission region A11 and a second transmission region A12. A first sub-image formed by the first transmission region A11 and a second sub-image formed by the second transmission region A12 may have different attributes.

In this case, the areas occupied by the first and second transmission regions A11 and A12 within the first lens area A1 may be different. This is to ensure that the first and second sub-images formed by the first and second transmission regions A11 and A12 of the first lens area A1 have a more uniform brightness.

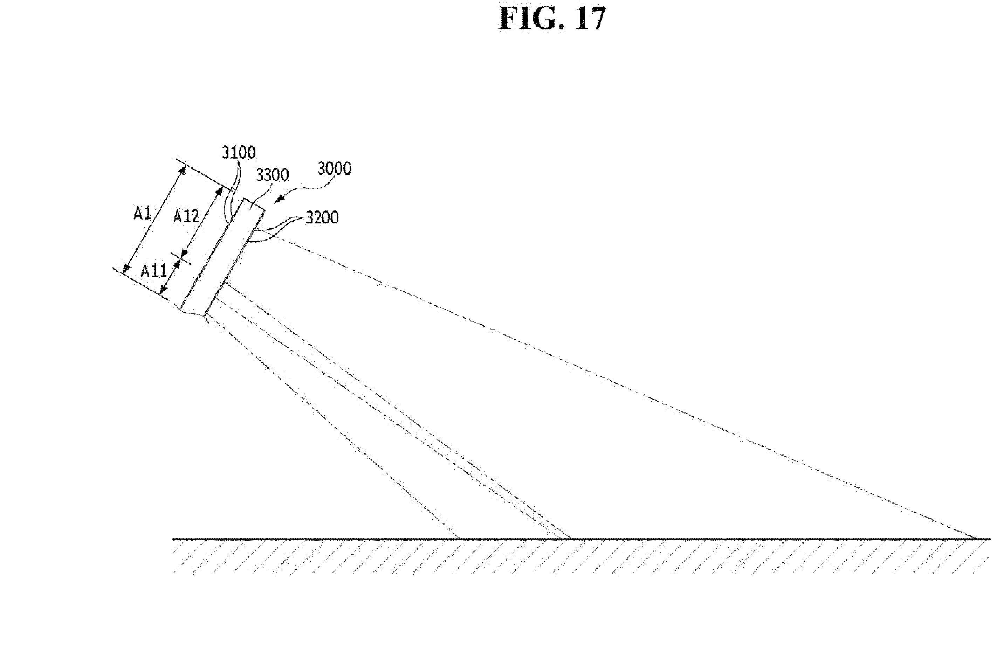

For example, as illustrated in FIG. 17, if the position where the first sub-image is to be formed by the first transmission region A11 of the first lens area A1 is closer than the position where the second sub-image is to be formed by the second transmission region A12 along at least one direction with respect to the optical lens unit 3000, i.e., if the region irradiated by the light that passes through the first transmission region A11 of the first lens area A1 is more proximate to the lamp than the region irradiated by the light that passes through the second transmission region A12, the first and second sub-images may be formed with a substantially uniform brightness, even though the first transmission region A11 is smaller than the second transmission region A12. Accordingly, a sense of visual discomfort that may occur due to the brightness discrepancy between the first and second sub-images can be prevented.

In other words, since light intensity is inversely proportional to the square of the distance, even if the first transmission region A11 is smaller than the second transmission region A12 within the first lens area A1, the first sub-image may be formed at a closer position than the second sub-image from the vehicle lamp 1, i.e., from the optical lens unit 3000, and the first and second sub-images may thus have a uniform brightness.

In this embodiment, an example is provided in which the areas occupied by the first transmission region A11 and the second transmission region A12 in the first lens area A1 are different to ensure a uniform brightness between the first and second sub-images formed at different distances from the vehicle lamp 1. However, this is merely an example for understanding the present disclosure, and the sizes of the first and second transmission regions A11 and A12 may be variously modified to satisfy the required attributes of the first and second sub-images.

Meanwhile, similar to the first lens area A1, the second, third, and fourth lens areas A2, A3, and A4 may also include first transmission regions A21, A31, and A41, respectively, and second transmission regions A22, A32, and A42, respectively, similar to the first lens area A1.

In this case, the first transmission region of any one of the first, second, third, or fourth lens areas A1, A2, A3, and A4 may form a sub-image having a different attribute from the first transmission region of another lens area. Similarly, the second transmission region of any one of the first, second, third, or fourth lens areas A1, A2, A3, and A4 may form a sub-image with a different attribute from the second transmission region of another lens area.

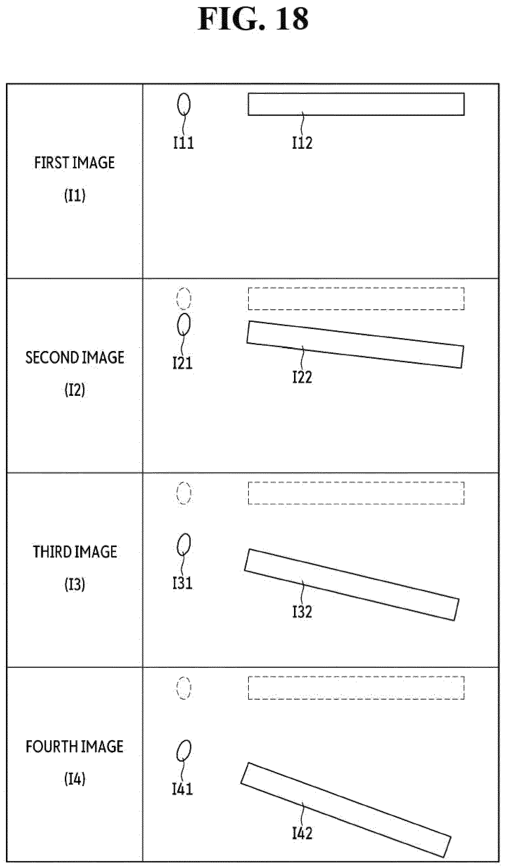

FIG. 18 is a schematic view illustrating images formed by the vehicle lamp according to an embodiment of the present disclosure.

Referring to FIG. 18, the optical lens unit 3000 may allow first, second, third, and fourth images I1, I2, I3, and I4 to be formed by the light that passes through the first, second, third, and fourth lens areas A1, A2, A3, and A4, respectively.

In this case, the first, second, third, and fourth images I1, I2, I3, and I4 may include first sub-images I11, I21, I31, and I41, respectively, and second sub-images 112, I22, I32, and I42, respectively, having a different attribute from the first sub-images I11, I21, 131, and I41. The first sub-images I11, I21, 131, and I41 and second sub-images I12, I22, I32, and I42 of the first, second, third, and fourth images I1, I2, I3, and I4 may be formed at different positions. The first sub-images I11, I21, I31, and I41 may be formed at a position more proximate than the respective second sub-images I12, I22, I32, and I42 to the optical lens unit 3000 in at least one direction.

In this embodiment, the first, second, third, and fourth images I1, I2, I3, and I4 may have different attributes since their respective pairs of first and second sub-images I11 and I12, I21 and I22, I31 and I32, and I41 and I42 are projected at different positions, but the present disclosure is not limited thereto. The first, second, third, and fourth images I1, I2, I3, and I4 with different attributes may include not only a case where their respective pairs of first and second sub-images I11 and I12, I21 and I22, I31 and I32, and I41 and I42 are projected at different positions, but also a case where their respective pairs of first and second sub-images I11 and I12, I21 and I22, I31 and I32, and I41 and I42 differ in at least one of shape, size, brightness, or color. For example, even if the pairs of first and second sub-images I11 and I12, I21 and I22, I31 and I32, and I41 and I42 are formed at the same positions, they may be formed in different sizes.

In this case, forming the pairs of first and second sub-images I11 and I12, I21 and I22, I31 and I32, and I41 and I42 at different positions may mean that the positions of their centers are disposed at different locations in at least one direction.

The first, second, third, and fourth images I1, I2, I3, and I4 may provide separate pieces of information, or two or more of the first, second, third, and fourth images 11, I2, I3, and I4 may be combined to provide a single piece of information.

In FIG. 18, the dotted lines indicate the positions of the first and second sub-images I11 and I12 that constitute the first image I1. The dotted lined images are presented in each panel for the purpose of comparing the positions at which the second, third, and fourth images I2, I3, and I4 are formed with respect to the first image I1.

The positions at which the first, second, third, and fourth images I1, I2, I3, and I4 are formed are not limited to those illustrated in FIG. 18 and may vary depending on the shape or curvature of the incident lenses and exit lenses included in the first, second, third, and fourth lens areas A1, A2, A3, and A4.

Depending on the lighting sequence, interval, or duration of the respective light sources 1210, 1220, 1230, and 1240, the first, second, third, and fourth images I1, I2, I3, and I4 may be simultaneously formed or may be sequentially formed in at least one direction.

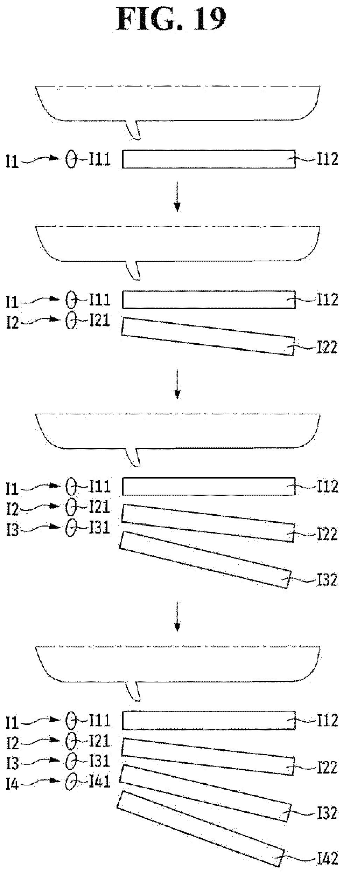

FIG. 19 is a schematic view illustrating multiple images sequentially formed along one direction according to an embodiment of the present disclosure.

Referring to FIG. 19, the vehicle lamp 1 may sequentially turn on the light sources 1210, 1220, 1230, and 1240, which correspond to the first, second, third, and fourth lens areas A1, A2, A3, and A4 respectively, in accordance with a predetermined lighting interval. In this case, the first, second, third, and fourth images I1, I2, I3, and I4 may be sequentially formed along one direction.

FIG. 19 illustrates an example in which the first sub-images I11, I21, I31, and I41 and the second sub-images 112, I22, I32, and I42 of the first, second, third, and fourth images I1, I2, I3, and I4 are sequentially formed in the same direction, i.e., in a direction away from the vehicle along the lateral side of the vehicle, but the present disclosure is not limited thereto. The first, second, third, and fourth images I1, I2, I3, and I4 may be sequentially formed in any direction with respect to the vehicle or the vehicle lamp 1, including a direction toward the vehicle, a direction along the longitudinal direction of the vehicle, or any combinations thereof.

Also, FIG. 19 illustrates an example in which the first, second, third, and fourth images I1, I2, I3, and I4 are sequentially formed along one direction, but the present disclosure is not limited thereto. The first sub-images I11, I21, I31, and I41 and the second sub-images I12, I22, I32, and I42 of the first, second, third, and fourth images I1, I2, I3, and I4 may be sequentially formed along different directions.

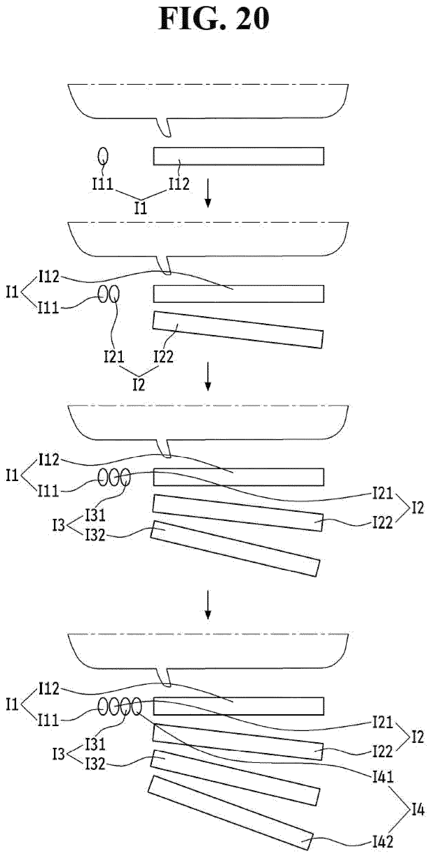

FIG. 20 is a schematic view illustrating multiple images sequentially formed along different directions according to an embodiment of the present disclosure.

Referring to FIG. 20, the vehicle lamp 1 may sequentially turn on the light sources 1210, 1220, 1230, and 1240, which correspond to the first through fourth lens areas A1, A2, A3, and A4, in accordance with a predetermined lighting interval. In this case, the first, second, third, and fourth images I1, I2, I3, and I4 may be sequentially formed along different directions.

For example, the first sub-images I11, I21, I31, and I41 of the first, second, third, and fourth images I1, I2, I3, and I4 may be sequentially formed in a longitudinal direction going from the front to the rear of the vehicle, whereas the second sub-images 112, I22, I32, and I42 may be sequentially formed in a lateral direction going away from the vehicle.

FIGS. 19 and 20 both illustrate an example in which the first, second, third, and fourth images I1, I2, I3, and I4 are formed without overlapping with one another, but the present disclosure is not limited thereto. In some embodiments, two or more of the first, second, third, and fourth images I1, I2, I3, and I4 may be formed to overlap with one another. Here, forming two or more of the first, second, third, and fourth images I1, I2, I3, and I4 to overlap may refer to a case where a portion of one image overlaps with a portion of another image, a case where one image is entirely encompassed within another image, and a case where one image is superposed on another image to substantially correspond to each other.

As described above, since the vehicle lamp 1 is configured to form images with different attributes in the first, second, third, and fourth lens areas A1, A2, A3, and A4 of the optical lens unit 3000, and each of the images include a plurality of sub-images with different attributes, a component for forming images with different attributes can be shared. This feature allows for a reduction in the number of parts and the manufacturing costs.

Additionally, since the vehicle lamp 1 allows multiple images to be sequentially formed along one direction or different directions, not only static images but also dynamic images can be implemented.

In concluding the detailed description, those skilled in the art will appreciate that many variations and modifications can be made to the exemplary embodiments without substantially departing from the principles of the present disclosure. Therefore, the disclosed exemplary embodiments are to be used in a generic and descriptive sense only and not for purposes of limitation.

## Claims

1. A vehicle lamp comprising:
a light source unit including a plurality of light sources, each of which generates light;
an optical path adjustment unit that adjusts a path of the light emitted from at least one of the plurality of light sources; and
an optical lens unit including a plurality of incident lenses, into which the light emitted from the optical path adjustment unit is incident, and a plurality of exit lenses, through which the light incident into the plurality of incident lenses is emitted,
wherein the optical path adjustment unit includes a plurality of adjustment lenses configured to adjust the path of the light emitted from the plurality of light sources.

2. The vehicle lamp of claim 1, wherein the optical lens unit further includes a plurality of shields disposed between the plurality of incident lenses and the plurality of exit lenses and configured to obstruct a portion of light from proceeding toward the plurality of exit lenses.

3. The vehicle lamp of claim 1, wherein the optical lens unit is divided into a plurality of lens areas to correspond to the plurality of light sources, and
wherein light that passes through at least one of the plurality of lens areas forms at least one image on a surface onto which the light is irradiated.

4. The vehicle lamp of claim 3, wherein among a plurality of images formed by the light that passes through the plurality of lens areas, at least one image has a different attribute from at least one other image.

5. The vehicle lamp of claim 4, wherein the attribute includes at least one of image shape, formation position, brightness, size, or color.

6. The vehicle lamp of claim 4, wherein at least one of the plurality of lens areas includes a plurality of transmission regions, and
wherein sub-images formed by light that passes through the plurality of transmission regions have different attributes.

7. The vehicle lamp of claim 6, wherein areas occupied by the plurality of transmission regions within the at least one of the plurality of lens areas are different.

8. The vehicle lamp of claim 6, wherein among the sub-images, at least one sub-image is formed at a different distance from the optical lens unit than at least one other sub-image.

9. The vehicle lamp of claim 8, wherein among the plurality of transmission regions, a transmission region configured to form a sub-image at a position more proximate to the optical lens unit has a smaller area than a transmission region configured to form a sub-image at a position more distant from the optical lens unit.

10. The vehicle lamp of claim 4, wherein the plurality of images are sequentially formed along at least one direction.

11. The vehicle lamp of claim 10, wherein each of the plurality of images includes a plurality of sub-images, and
wherein the plurality of sub-images are sequentially formed along a same direction.

12. The vehicle lamp of claim 10, wherein each of the plurality of images includes a plurality of sub-images, and
wherein a sub-image of at least one image among the plurality of images and another sub-image of at least one other image among the plurality of images are sequentially formed along different directions.
